# EUROPEAN PATENT APPLICATION

(11) **EP 4 636 335 A1**
(43) Date of publication of application: **22.10.2025**
(21) Application number: 24170300.8
(22) Date of filing: 15.04.2024
(51) Int. Cl.: F24S 25/61

(54) **A FASTENING DEVICE FOR FASTENING OBJECTS TO A BUILDING ROOF**

(71) Applicant: Sika Technology AG, 6340 Baar (CH)
(72) Inventor: GOMES, Marco, Arni 8905 (CH); NÄF, Armin, 6023 Rothenburg (CH)
(74) Representative: Sika Patent Attorneys

(57) **Abstract**

The present invention provides a fastening device 1 for fastening objects, preferably panels, more preferably photovoltaic or solar panels, to a building roof, comprising: an anchor plate 2 for fastening the fastening device 1 to the building roof, a connecting element 3 which is connected or connectable substantially orthogonally to the anchor plate 2, in particular is welded to the anchor plate 2, a base element 4 extending around the connecting element 3 and having a conical outer surface 5, the base element 4 being connected or connectable to the connecting element 3 and/or the anchor plate 2, preferably being welded to the connecting element 3 and/or the anchor plate 2, further preferably being formed in one piece with the connecting element 3 and/or the anchor plate 2, a locking element 6, wherein the locking element 6 is connectable, in particular releasably connectable, to the connecting element 3 and having a first region 7 which substantially corresponds to a contour of the base element 4, in particular having a conical inner surface 8, and a second region 9 which has a fastening means 10 for fastening the objects to the fastening device 1.

## Description

The invention relates to a fastening device for fastening objects to a building roof and to a method of using a fastening device.

Fastening devices for fastening objects to a building roof are known. In particular, these fastening devices particularly comprise a glass fiber-reinforced base plate with several fastening holes for mechanically fastening the fastening device to the building roof, a threaded rod that can be attached to the base plate for fastening objects to the fastening device and a plastic element extending around the threaded rod. A flat ring seal is arranged between the plastic element and the base plate, whereby the plastic element and the seal are braced relative to the base plate via a nut arranged on the threaded rod in order to create a seal between the fastening device and a building roof layer. The disadvantage of these fastening devices is that the sealing of the fastening device against a building roof layer substantially depends on the pretensioning force of the nut. If the pre-tensioning force is too low, the fastening device may not be adequately sealed against the building roof layer, allowing moisture to enter the building roof. In addition, the nut can loosen by itself due to external influences such as vibration, which, as already described, results in an inadequate seal between the fastening device and the building roof layer. As the threaded rod extends from the base plate to the outer end of the fastening device to which the objects can be attached, moisture can enter the building roof via the threads of the threaded rod, e.g. through capillary action. Furthermore, external influences, e.g. UV rays, lead to embrittlement of the plastic or glass fiber reinforced components, resulting in premature failure of the fastening device. In addition, the known fastening devices are complicated to handle due to their many components.

The invention is based in particular on the task of providing a simple and cost-effective fastening device for fastening objects, preferably panels, more preferably photovoltaic or solar panels, to a building roof, which ensures a secure and reliable sealing of the fastening device with respect to a building roof layer. Furthermore, the invention is based in particular on the task of providing a method for using a fastening device.

According to the invention, this task is solved with regard to the fastening device, in particular by the subject matter of claim 1. With regard to the method for using a fastening device, the above task is solved in particular by the subject matter of claim 15.

Specifically, the above task is solved in particular by a fastening device for fastening objects, preferably panels, more preferably photovoltaic or solar panels, to a building roof, the fastening device comprising the following: an anchor plate for fastening the fastening device to the building roof, a connecting element which is connected or connectable substantially orthogonally to the anchor plate, in particular is welded to the anchor plate, a base element extending around the connecting element and having a conical outer surface, the base element being connected or connectable to the connecting element and/or the anchor plate, preferably being welded to the connecting element and/or the anchor plate, further preferably being formed in one piece with the connecting element and/or the anchor plate, a locking element, wherein the locking element is connectable, in particular releasably connectable, to the connecting element and having a first region which substantially corresponds to a contour of the base element, in particular having a conical inner surface, and a second region which has fastening means for fastening the objects to the fastening device.

Furthermore, the task is solved in particular by a method for using a fastening device, wherein the fastening device is designed for fastening objects, preferably panels, further preferably photovoltaic or solar panels, to a building roof. The method of using the fastening device comprises the following steps: Connecting an anchor plate to the building roof, welding or bonding a first layer, in particular a waterproof layer, for depositing on a surface of a building roof to the anchor plate and/or a base element, in particular to a conical outer surface of the base element, wherein the base element extends around a connecting element which is connected or connectable substantially orthogonally to the anchor plate, in particular is welded to the anchor plate, and the base element is connected or connectable to the connecting element and/or the anchor plate, preferably is welded to the connecting element and/or the anchor plate, further preferably formed in one piece with the connecting element and/or the anchor plate, connecting, in particular releasably connecting, a locking element to the connecting element, wherein the locking element having a first region which substantially corresponds to a contour of the base element, in particular having a conical inner surface, so that the first region of the locking element can be brought into contact with the first layer and/or the base element in order to create a connection, in particular a watertight connection.

One idea of the invention is that the fastening device enables reliable and simple fastening of objects, preferably panels, more preferably photovoltaic or solar panels, to a building roof. In addition, the fastening device enables a reliable and maintenance-free sealing of the fastening device against a building roof layer.

In the context of the invention, a conical surface is to be understood as a lateral surface of a cone, in particular a truncated cone.

The base element can have one or more parallel surfaces in the installation position of the fastening device relative to the anchor plate and/or one or more inclined surfaces relative to an axis of symmetry of the base element. The one or more inclined surfaces can be inclined by an angle of 20°-70°, preferably by an angle between 30°-60°, in particular by 45°, relative to an axis of symmetry of the base element.

An inner surface is understood to be a surface of the fastening device that is arranged on the inside in the installation position of the fastening device, in particular with its normal vector pointing in the direction of the building roof in the installation position of the fastening device.

An outer surface is understood to be a surface of the fastening device that is arranged on the outside in the installation position of the fastening device, in particular with its normal vector pointing away from the building roof in the installation position of the fastening device.

The installation position of the fastening device refers to the position in which the fastening device is fastened to the building roof.

A contour of the base element means, in particular, an outer edge running along a surface of the base element.

The conical outer surface of the base element can be substantially congruent with the conical inner surface of the locking element. In particular, the base element and the locking element can be positively connected. This is advantageous, as it enables an even distribution of force between the base element and the locking element.

The fastening device, in particular the anchor plate and/or the base element and/or the locking element, can be substantially rotationally symmetrical. This is advantageous, as the fastening device can be used in a variety of ways in this way and incorrect assembly can be practically ruled out.

In the installation position of the fastening device, the first region of the locking element can be designed as an upper area, in particular as an upper end, of the locking element. The first region can have a lateral surface that is substantially parallel to a lateral surface of the connecting element.

In the installation position of the fastening device, the first region of the locking element can be designed as a lower area, in particular as a lower end, of the locking element. The first region of the locking element can be formed as a truncated cone. The first region of the connecting element can have an outer surface which is inclined relative to an axis of symmetry of the connecting element by an angle of 10°-80°, preferably by an angle of 20°-70°, more preferably by an angle between 30°-60°, in particular by 45°. This is advantageous as water can be drained quickly and reliably in this way and does not collect in the area around the fastening device.

The fastening means for fastening objects to the fastening device can be designed as a blind hole and/or have a thread. This is advantageous, as in this way the objects can either be connected directly to the fastening means, in particular the connecting element, or can be connected indirectly by a synchronization element, which is connected on the one hand to the fastening means and on the other hand to the object. In particular, the synchronization element can be exchanged, in particular replaced by a shorter or longer synchronization element, without having to detach the locking element from the connecting element. This is advantageous, as objects can be easily connected to the fastening means in this way. In particular, by changing the synchronization element, a synchronization element adapted to the fastening height of the object relative to the fastening means can be used, which on the one hand saves material and on the other hand allows the fastening height of the object relative to the fastening means to be subsequently increased by using a longer synchronization element.

The synchronization element can be designed as a threaded rod. This is advantageous, as in this way the fastening height of the object relative to the fastening means can be continuously adjusted along the synchronization element and thus the object can be aligned.

The locking element can have a further fastening means located on the inside in the installation position of the fastening device, in particular a further fastening means formed at the upper end of the first region in the installation position of the fastening device. The further fastening means can be arranged coaxially to the fastening means for fastening the objects to the fastening device. The further fastening means may be formed as a blind hole. The further fastening means may have a thread in order to be connectable to the connecting element. The further fastening means can substantially correspond to the geometry of the fastening means for fastening the objects to the fastening device. This is advantageous, as in this way the locking element can be securely and easily connected to the connecting element. In particular, the fastening device can be manufactured cost-effectively, preferably by machining with a lathe, as a small number of reclamping operations and tool changes are required.

The connecting element may have a height relative to the anchor plate of less than 11 cm, in particular less than 9 cm, optionally, less than 7.6 cm, and/or more than 4 cm, optionally more than 6 cm. The further fastening means may be configured accordingly to receive such a connecting element.

In particular, a first layer and a surface of a building roof means a layer that contains a bitumen or is made from it. The surface of a building roof can be defined by the upper side of a roofing membrane. The first layer can be designed as a ring element. The first layer can have a dimension that is larger than a maximum dimension of the anchor plate, so that the first layer protrudes over the anchor plate. The first layer can be welded or bonded to the surface of a building roof, in particular at an outer edge area of the first layer. This is advantageous, as in this way the fastening device is additionally sealed against a building roof layer.

Preferred embodiments of the invention are given in the sub-claims.

In a preferred embodiment of the fastening device, a sealing element, preferably an annular sealing element, is arranged between the locking element and the base element. The sealing element can have an inner circular opening whose diameter substantially corresponds to the upper end of the base element in the installation position of the fastening device. The sealing element can have an outer diameter that substantially corresponds to the lower end of the base element when the fastening device is in the installed position. The sealing element can be substantially flat in the initial state, i.e. before it is arranged between the locking element and the base element. This is advantageous as it enables additional sealing of the fastening device against a building roof layer. In particular, sufficient sealing can be ensured even if the first layer is insufficiently welded or bonded to the anchor plate and/or the base element. Furthermore, by using a sealing element that is substantially flat in its initial state, a standard sealing element available on the market can be used, which leads to a reduction in costs.

The sealing element can have a thickness that is substantially less than or equal to the difference between the height of the connecting element relative to an upper surface of the base element in the installation position of the fastening device and a depth of the further fastening device of the locking element. This is advantageous because it can be ensured in this way that the sealing element is not damaged due to excessive compression.

In a further preferred embodiment of the fastening device, the sealing element substantially corresponds to the contour of the base element, in particular the sealing element has a conical inner and/or outer surface. The sealing element can be designed as a hollow truncated cone. The inner and/or outer surface of the sealing element can be inclined relative to an axis of symmetry of the sealing element by an angle of 10°-80°, preferably by an angle of 20°-70°, more preferably by an angle between 30°-60°, in particular by 45°. This is advantageous as it enables reliable sealing of the fastening device against a building roof layer.

In a further preferred embodiment of the fastening device, the sealing element comprises a rubber, preferably a synthetic rubber, further preferably ethylene-propylene-diene rubber. The sealing element can also consist entirely of a rubber, preferably a synthetic rubber, further preferably ethylene-propylene-diene rubber. This is advantageous, as such a sealing element can withstand external influences such as UV radiation and mechanical stress over a long period of time, thus enabling reliable sealing of the fastening device against a building roof layer.

In a further preferred embodiment of the fastening device, the first region and the second region of the locking element are separated from each other by a material web. The material web can be arranged parallel to the anchor plate in the installation position of the fastening device. The material web can be arranged between the fastening means of the first region and the further fastening means of the locking element located on the inside in the installation position of the fastening device. The material web can be connected to the locking element as one piece, in particular formed integrally with the locking element. This is advantageous, as in this way the two fastening means are spatially separated from each other, which can prevent moisture from penetrating via the fastening means for fastening the objects.

In a further preferred embodiment of the fastening device, the locking element is made of metal, in particular steel or aluminum. The locking element can be manufactured by a casting process and/or by mechanical processing such as milling or turning. This is advantageous, as the locking element can be manufactured easily and cost efficient in this way. In addition, the metal locking element withstands external influences such as UV radiation and mechanical stress over a long period of time, in particular over a longer period of time than a locking element made of glass fiber reinforced/plastic.

In a further preferred embodiment of the fastening device, the base element and/or the anchor plate is made of metal, in particular steel or aluminum. The base element and/or the anchor plate can be manufactured by a casting process and/or by mechanical processing, such as milling or turning. This is advantageous, as the base element and/or the anchor plate can be manufactured easily and cost efficient in this way. In addition, the base element and/or anchor plate made of metal withstands external influences such as UV radiation and mechanical stress over a long period of time, in particular over a longer period of time than a base element and/or anchor plate made of glass fiber reinforced/plastic.

In a further preferred embodiment of the fastening device, the anchor plate has indentations and/or elevations, in particular radially extending indentations and/or elevations. The indentations and/or elevations may extend from a center point of the anchor plate, in particular in the radial direction of the anchor plate. The indentations and/or elevations may be evenly distributed along a diameter of the anchor plate. The indentations and/or elevations can extend from an upper surface of the anchor plate in the installation position of the fastening device to a lower surface of the anchor plate in the installation position of the fastening device. The elevations can protrude from a lower surface of the anchor plate in the installation position of the fastening device. The indentations can be recessed relative to an upper surface of the anchor plate in the installation position of the fastening device. The indentations can extend on the anchor plate from the base element to an outer edge of the anchor plate. This is advantageous, as the rigidity of the anchor plate can be increased in this way. In particular, the indentations and/or elevations allow a thinner anchor plate to be used that has a similar rigidity to a thicker anchor plate. Material can therefore be saved.

In a further preferred embodiment of the fastening device, the anchor plate has first openings, in particular circular first openings, for receiving coupling elements, wherein the coupling elements create a connection between the anchor plate and the building roof. The first openings may be evenly distributed along a diameter of the anchor plate. The first openings can extend from an upper surface of the anchor plate in the installation position of the fastening device to a lower surface of the anchor plate in the installation position of the fastening device. The first openings may have a diameter of less than 30 mm, in particular less than 28 mm, possibly less than 25 mm, and/or more than 15 mm, possibly more than 18 mm, preferably exactly 20 mm. The first openings may be configured to receive a screw. The indentations and/or elevations of the anchor plate may extend around a diameter of the first openings. This is advantageous, as in this way the anchor plate can be easily and reliably connected to the building roof. In particular, the indentations and/or elevations of the anchor plate, which extend around a diameter of the first openings, can increase the rigidity of the area around the first openings.

In a further preferred embodiment of the fastening device, the anchor plate has second openings, in particular circular first openings, for receiving the coupling elements, wherein a diameter of the first openings is smaller than a diameter of the second openings. The second openings may be evenly distributed along a diameter of the anchor plate. The second openings may be arranged along a diameter of the anchor plate between the first openings. The second openings may extend from an upper surface of the anchor plate in the installation position of the fastening device to a lower surface of the anchor plate in the installation position of the fastening device. The second openings may have a diameter of less than 15 mm, in particular less than 10 mm, possibly less than 8 mm, and/or more than 4 mm, possibly more than 5 mm, preferably exactly 6 mm. The second openings may be configured to receive a screw. The indentations and/or elevations of the anchor plate may extend around a diameter of the second openings. This is advantageous, as in this way the anchor plate can be easily and reliably connected to the building roof. In particular, the indentations and/or elevations of the anchor plate, which extend around a diameter of the second openings, can increase the rigidity of the area around the second openings. In addition, the first and second openings enable the use of coupling elements adapted to a building roof, in particular to a building roof layer, preferably to a compressive strength of a building roof layer, in particular the first and second openings enable the use of coupling elements with larger and smaller diameters.

In a further preferred embodiment of the fastening device, the second region of the locking element has a receiving region for a tool, in particular in the form of a regular polygonal prism. The receiving region can be formed along an outer surface of the second region. The receiving region can extend on the locking element around the fastening means for receiving objects. The receiving region can be formed as a hexagonal prism. The receiving region can be formed as one piece with the locking element. An outer surface of the receiving region can be formed substantially parallel to an axis of rotation of the connecting element. This is advantageous because the fastening device is easy to assemble in this way, in particular it can be assembled using commercially available tools. In addition, the one-piece design of the receiving region with the connecting element allows that leaks can be avoided.

In a further preferred embodiment of the fastening device, the connecting element is a threaded rod. The connecting element may have a metric thread. The connecting element may have a diameter of less than 20 mm, in particular less than 15 mm, optionally, less than 12 mm, and/or more than 5 mm, optionally more than 8 mm, preferably exactly 10 mm. This is advantageous, since in this way a distance between the connecting element and the base element and/or the anchor plate can be infinitely adjusted.

With regard to the method, reference is made to the advantages explained in connection with the fastening device. Furthermore, the method may alternatively or additionally have individual features or a combination of several features mentioned above in relation to the fastening device. Further embodiments of the method can implement the configurations and/or functions explained above in connection with the fastening device in terms of the method.

In one embodiment of the method, a distance between the locking element and the base element and/or the anchor plate can be adjusted by rotating the locking element. The locking element can be rotated by a tool connected to the receiving region of the locking element. The locking element can be rotatable relative to the connecting element. The locking element can be continuously rotatable. This is advantageous because it makes the fastening device easy to handle and a contact pressure/pressure force of the locking element on the base element, the first layer and/or the sealing element can be easily adjusted, thereby achieving a reliable seal of the fastening device.

Furthermore, the above task is solved by a system comprising the fastening device according to the invention and a first layer, in particular a waterproof layer, for depositing on a surface of a building roof, wherein a first surface, in particular an underside, of the first layer is in contact with the anchor plate and/or the base element and/or the surface of a building roof and a second surface, in particular an upper side, of the first layer is in contact with the locking element or the sealing element.

With regard to the system, reference is made to the advantages explained in connection with the fastening device. Furthermore, the system may alternatively or additionally have individual features or a combination of several features mentioned above in relation to the fastening device.

In one embodiment of the system, the connecting element extends through an opening in the first layer. The opening can be arranged around a center point of the first layer. The opening may have a diameter that is greater than or equal to an extension, in particular a diameter, of a surface of the base element that is parallel relative to the anchor plate when the fastening device is in the installed position. The opening can have a diameter that is smaller than or equal to a distance, parallel to the anchor plate, from surfaces of the base element that are inclined relative to an axis of rotation of the base element. This is

This is advantageous because the first layer can be easily positioned on the fastening device in this way, thus achieving a reliable seal of the fastening device.

The invention is explained in more detail below with reference to the accompanying drawings. The embodiments shown represent examples of how the fastening device, the method and the system according to the invention can be designed.

Show therein:
- Fig. 1: a sectional view according to an embodiment example of a fastening device according to the invention;
- Fig. 2: an exploded view of the sectional view of the embodiment of the fastening device according to the invention shown in Fig. 1;
- Fig. 3: an exploded perspective view of the sectional view of the embodiment of the fastening device according to the invention shown in Fig. 1;
- Fig. 4: a perspective view of the embodiment of the fastening device according to the invention shown in Fig. 1;
- Fig. 5: a sectional view according to a further embodiment of the fastening device according to the invention;
- Fig. 6: an exploded view of the sectional view of the further embodiment of the fastening device according to the invention shown in Fig. 5;
- Fig. 7: an exploded perspective view of the sectional view of the further embodiment of the fastening device according to the invention shown in Fig. 5;
- Fig. 8: a perspective view of the further embodiment of the fastening device according to the invention shown in Fig. 5;
- Fig. 9: a sectional view according to an embodiment example of the system according to the invention, wherein the system comprises the embodiment example of the fastening device according to the invention as shown in Figs. 1-4.
- Fig. 10: a sectional view according to a further embodiment example of the system according to the invention, wherein the system comprises the further embodiment example of the fastening device according to the invention according to Figs. 5-8.

In the following, the same reference numbers are used for identical and identically acting parts.

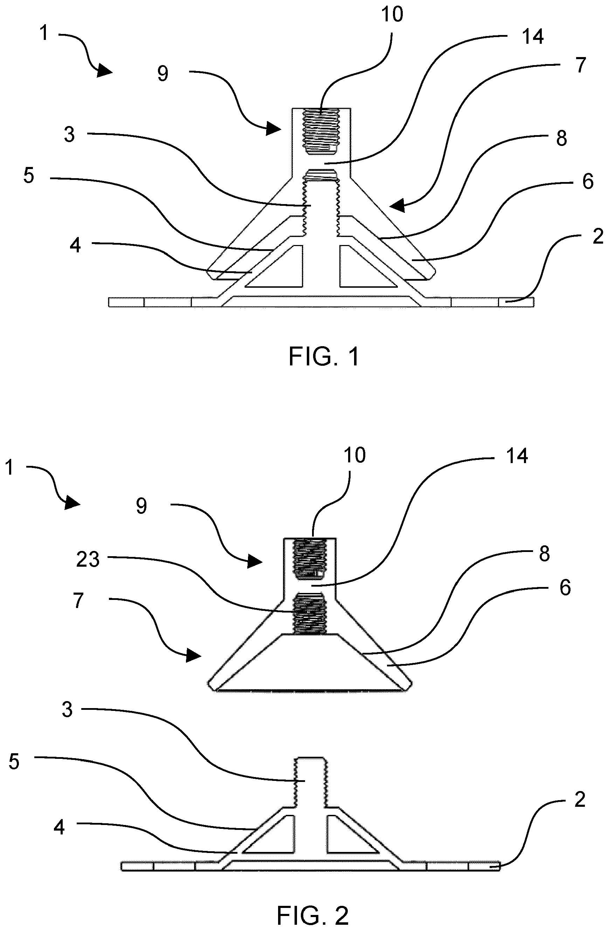

Figure 1 shows a fastening device 1 in the assembled state, with a locking element 6 screwed onto a connecting element 3. A base element 4 is formed as one piece with the connecting element 3 and an anchor plate 2. The connecting element 3 has a thread that is connected to the thread of the other fastening means located on the inside in the installation position of the fastening device 1. The locking element 6 has a first region 7 and a second region 9. The first region 7 of the locking element 6 has a conical inner surface 8. The second region 9 of the locking element 6 has a fastening means 10 for fastening the objects to the fastening device 1. The fastening means 10 is designed as a blind hole with an internal thread. The first region 7 and the second region 9 of the locking element 6 are separated from each other by a material web 14, which is parallel to the anchor plate 2 and is formed as one piece with the locking element 6. The base element 4 has a conical outer surface 5.

Figure 2 shows the fastening device 1 as shown in Figure 1 in a disassembled state. In Figure 2, the locking element 6 is unscrewed from the connecting element 3. The locking element 6 has a further fastening means 23 located on the inside in the installation position of the fastening device 1. The further fastening means 23 formed at the upper end of the first region 7 in the installation position of the fastening device 1. The further fastening means 23 is arranged coaxially to the fastening means 10 for fastening the objects to the fastening device 1. The further fastening means 23 is formed as a blind hole. The further fastening means 23 has a thread in order to be connectable to the connecting element 3. The further fastening means 23 substantially correspond to the geometry of the fastening means 10 for fastening the objects to the fastening device 1. Reference is also made to the explanations in connection with Figure 1.

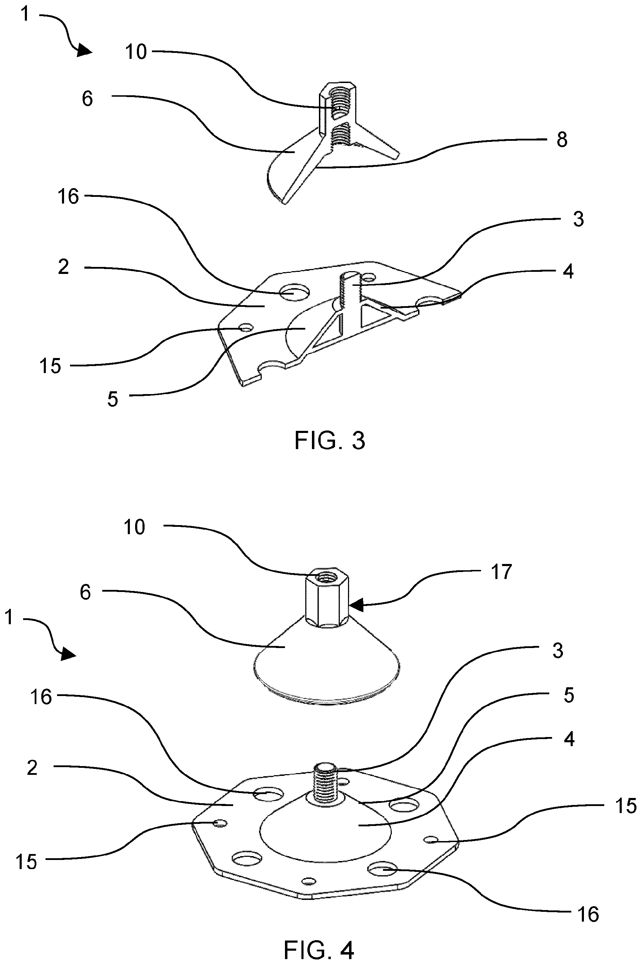

Figure 3 shows the fastening device 1 as shown in Figure 1 in a disassembled state. In Figure 3, the locking element 6 is unscrewed from the connecting element 3. In addition, first and second openings 15, 16 are shown. The first and second openings 15, 16 are evenly and alternately distributed along a diameter of the anchor plate 2. The first and second openings 15, 16 are formed as circular openings. The first and second openings 15, 16 are arranged in corner regions of the anchor plate 2. Reference is also made to the explanations in connection with Figure 1.

Figure 4 shows the fastening device 1 as shown in Figure 1 in a disassembled state. In Figure 4, the locking element 6 is unscrewed from the connecting element 3. The second region 9 of the connecting element 3 has a receiving region 17 for a tool. The receiving region 17 is formed along an outer surface of the second region 9. The receiving region 17 is designed as a hexagonal polygon prism. The anchor plate 2 is formed as an octagonal plate. Reference is also made to the explanations in connection with Figure 1.

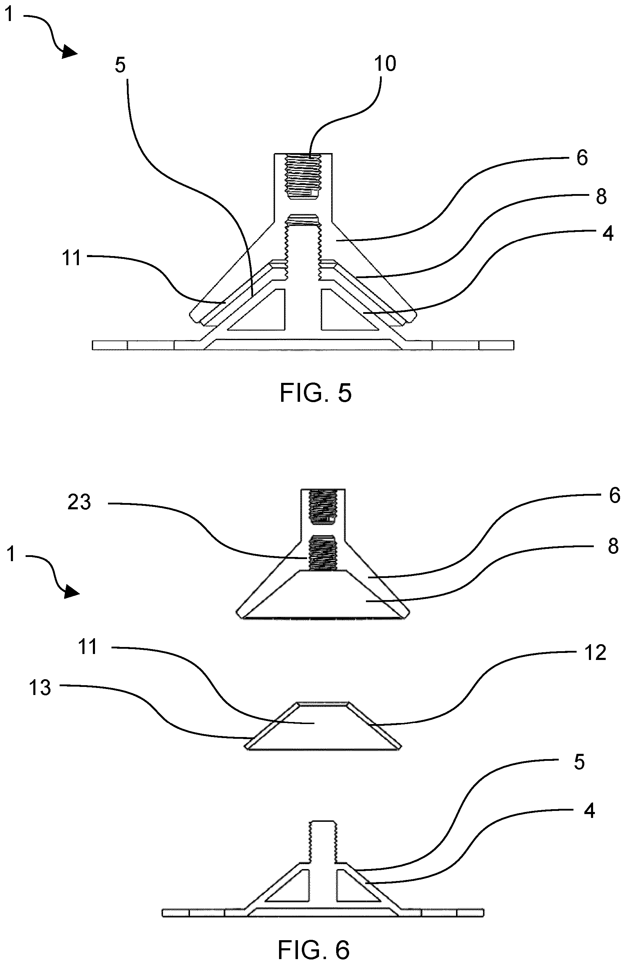

Figure 5 shows the fastening device 1 in the assembled state, with the locking element 6 screwed onto the connecting element 3. The fastening device 1 shown in Figure 5 differs from the fastening device 1 shown in Figure 1 in that a sealing element 11 is arranged between the locking element 6 and the base element 4. The sealing element 11 is in contact with the conical inner surface 8 of the locking element 6. The base element 4 is formed as one piece with the connecting element 3 and the anchor plate 2. The connecting element 3 has a thread that is connected to the thread of the other fastening means located on the inside in the installation position of the fastening device 1. The locking element 6 has the first region 7 and the second region 9. The first region 7 of the locking element 6 has the conical inner surface 8. The second region 9 of the locking element 7 has the fastening means 10 for fastening the objects to the fastening device 1. The fastening means 10 is designed as a blind hole with an internal thread. The first region 7 and the second region 9 of the locking element 6 are separated from each other by the material web 14, which is parallel to the anchor plate 2 and is formed as one piece with the locking element 6. The base element 4 has the conical outer surface 5.

Figure 6 shows the fastening device 1 as shown in Figure 5 in a disassembled state. In Figure 6, the locking element 6 is unscrewed from the connecting element 3. The sealing element 11 has a conical inner surface 12 and a conical outer surface 13. The locking element 6 has a further fastening means 23 located on the inside in the installation position of the fastening device 1. The further fastening means 23 formed at the upper end of the first region 7 in the installation position of the fastening device 1. The further fastening means 23 is arranged coaxially to the fastening means 10 for fastening the objects to the fastening device 1. The further fastening means 23 is formed as a blind hole. The further fastening means 23 has a thread in order to be connectable to the connecting element 3. The further fastening means 23 substantially correspond to the geometry of the fastening means 10 for fastening the objects to the fastening device 1. Reference is also made to the explanations in connection with Figure 5.

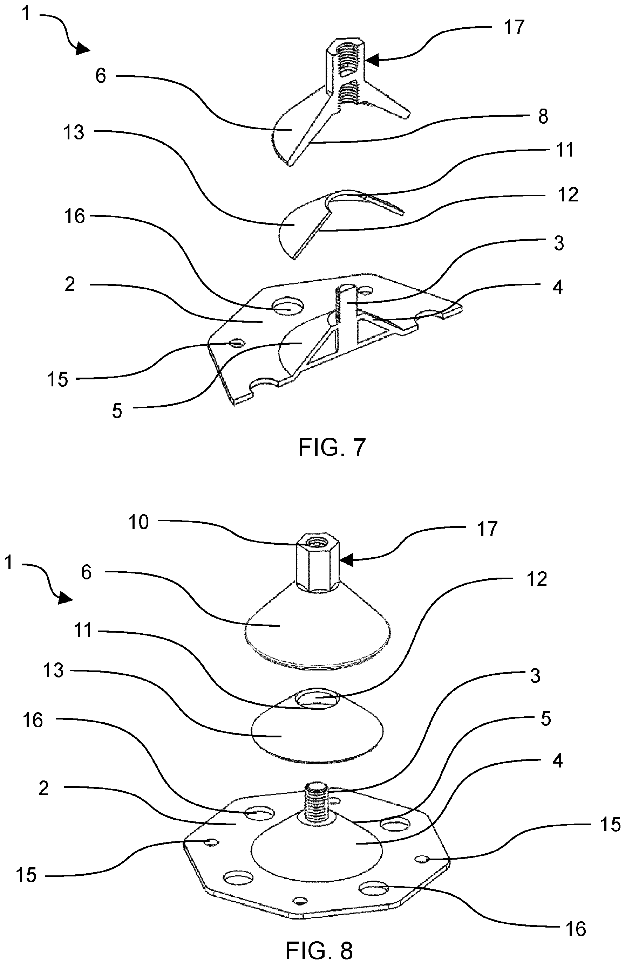

Figure 7 shows the fastening device 1 as shown in Figure 5 in a disassembled state. In Figure 7, the locking element 6 is unscrewed from the connecting element 3. In addition, the first and second openings 15, 16 are shown. The first and second openings 15, 16 are evenly and alternately distributed along a diameter of the anchor plate 2. The first and second openings 15, 16 are formed as circular openings. The first and second openings 15, 16 are arranged in corner regions of the anchor plate 2. Reference is also made to the explanations in connection with Figure 5.

Figure 8 shows the fastening device 1 as shown in Figure 5 in a disassembled state. In Figure 8, the locking element 6 is unscrewed from the connecting element 3. The second region 9 of the connecting element 3 has the receiving region 17 for a tool. The receiving region 17 is formed along an outer surface of the second region 9. The receiving region 17 is designed as an octagonal polygonal prism. The anchor plate 2 is formed as an octagonal plate. Reference is also made to the explanations in connection with Figure 5.

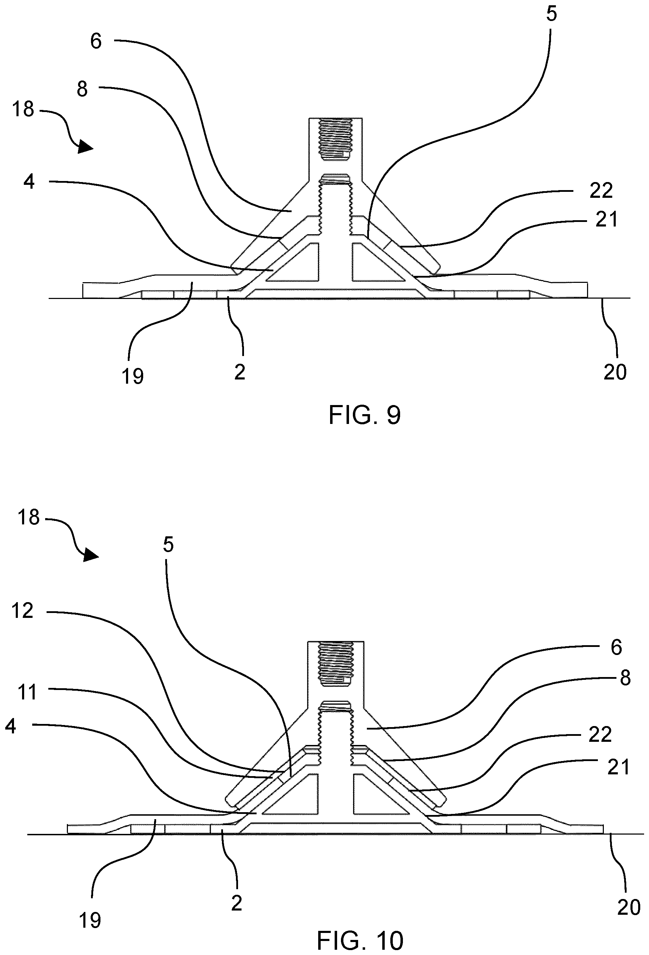

Figure 9 shows a system 18, the system 18 comprising the fastening device 1 as shown in Figures 1-4. A first surface 21 of a first layer 19 is in contact with the anchor plate 2, the base element 4 and a surface of a building roof 20. A second surface 22 of the first layer 19 is in contact with the locking element 6. The anchor plate 2 is in contact with the surface of a building roof 20. The first layer 19 protrudes radially beyond the anchor plate 2. An outer edge area of the first layer 19 is connected to the surface of a building roof 20. The second surface 22 of the first layer 19 is in contact with the conical inner surface 8 of the locking element 6. The first surface 21 of the first layer 19 is in contact with the conical outer surface 5 of the base element 4. The connecting element 3 extends through the opening of the first layer 19.

Figure 10 shows the system 18, comprising the fastening device 1 as shown in figures 5-8. The first surface 21 of the first layer 19 is in contact with the anchor plate 2, the base element 4 and the surface of a building roof 20. The second surface 22 of the first layer 19 is in contact with the sealing element 11. The anchor plate 2 is in contact with the surface of a building roof 20. The first layer 19 protrudes radially beyond the anchor plate 2. An outer edge area of the first layer 19 is connected to the surface of a building roof 20. The second surface 22 of the first layer 19 is in contact with the conical inner surface 12 of the sealing element 11. The first surface 21 of the first layer 19 is in contact with the conical outer surface 5 of the base element 4. The connecting element 3 extends through the opening of the first layer 19.

At this point, it should be noted that all the parts described above are claimed to be essential to the invention when viewed individually and in any combination, in particular the details shown in the drawings. Modifications thereof are familiar to those skilled in the art.

Furthermore, it is pointed out that the aim is to achieve the broadest possible scope of protection. In this respect, the disclosure contained in the claims can also be specified by features that are described with further features (even without these further features necessarily being included). It is explicitly pointed out that round brackets and the term "in particular" are intended to emphasize the optionality of features in the respective context (which does not mean, conversely, that a feature is to be regarded as mandatory in the corresponding context without such identification).

### List of reference symbols:

- 1: fastening device
- 2: anchor plate
- 3: connecting element
- 4: base element
- 5: conical outer surface of the base element
- 6: locking element
- 7: first region
- 8: conical inner surface of the locking element
- 9: second region
- 10: fastening means
- 11: sealing element
- 12: conical inner surface of the sealing element
- 13: conical outer surface of the sealing element
- 14: material web
- 15: first openings
- 16: second openings
- 17: receiving region
- 18: system
- 19: first layer
- 20: surface of a building roof
- 21: first surface
- 22: second surface
- 23: further fastening means

## Claims

1. Fastening device (1) for fastening objects, preferably panels, more preferably photovoltaic or solar panels, to a building roof, comprising:
an anchor plate (2) for fastening the fastening device (1) to the building roof,
a connecting element (3) which is connected or connectable substantially orthogonally to the anchor plate (2), in particular is welded to the anchor plate (2),
a base element (4) extending around the connecting element (3) and having a conical outer surface (5), the base element (4) being connected or connectable to the connecting element (3) and/or the anchor plate (2), preferably being welded to the connecting element (3) and/or the anchor plate (2), further preferably being formed in one piece with the connecting element (3) and/or the anchor plate (2),
a locking element (6), wherein the locking element (6) is connectable, in particular releasably connectable, to the connecting element (3) and having a first region (7) which substantially corresponds to a contour of the base element (4), in particular having a conical inner surface (8), and a second region (9) which has a fastening means (10) for fastening the objects to the fastening device (1).

2. Fastening device (1) according to claim 1,
wherein a sealing element (11), preferably an annular sealing element (11), is arranged between the locking element (6) and the base element (4).

3. Fastening device (1) according to claim 2,
wherein the sealing element (11) substantially corresponds to the contour of the base element (4), in particular having a conical inner and/or outer surface (12, 13),

4. Fastening device (1) according to claim 2 or 3,
wherein the sealing element (11) comprises a rubber, preferably a synthetic rubber, more preferably ethylene-propylene-diene rubber.

5. Fastening device (1) according to one of the preceding claims,
wherein the first region (7) and the second region (9) of the locking element (6) are separated from each other by a material web (14).

6. Fastening device (1) according to one of the preceding claims,
wherein the locking element (6) is made of metal, in particular steel or aluminum.

7. Fastening device (1) according to one of the preceding claims,
wherein the base element (4) and/or the anchor plate (2) are made of metal, in particular steel or aluminum.

8. Fastening device (1) according to one of the preceding claims,
wherein the anchor plate (2) has indentations and/or elevations, in particular radially extending indentations and/or elevations.

9. Fastening device (1) according to one of the preceding claims,
wherein the anchor plate (2) has first openings (15), in particular circular first openings (15), for receiving coupling elements,
wherein the coupling elements create a connection between the anchor plate (2) and the building roof.

10. Fastening device (1) according to claim 9,
wherein the anchor plate (2) has second openings (16), in particular circular second openings (16), for receiving the coupling elements,
wherein a diameter of the first openings (15) is smaller than a diameter of the second openings (16).

11. Fastening device (1) according to one of the preceding claims,
wherein the second region (9) of the locking element (6) has a receiving region (17) for a tool, in particular in the form of a regular polygonal prism.

12. Fastening device (1) according to one of the preceding claims,
wherein the connecting element (3) is a threaded rod.

13. System (18) comprising the fastening device (1) according to one of the preceding claims and a first layer (19), in particular a waterproof layer, for depositing on a surface of a building roof (20),
wherein a first surface (21), in particular an underside, of the first layer (19) is in contact with the anchor plate (2) and/or the base element (4) and/or the surface of a building roof (20) and a second surface (22), in particular an upper side, of the first layer (19) is in contact with the locking element (6) or the sealing element (11).

14. System (18) according to claim 13,
wherein the connecting element (3) extends through an opening of the first layer (19).

15. Method for using a fastening device (1), in particular according to one of the preceding claims, wherein the fastening device (1) is designed for fastening objects, preferably panels, further preferably photovoltaic or solar panels, to a building roof and comprises the following steps:
connecting an anchor plate (2) to the building roof,
welding or bonding of a first layer (19), in particular a waterproof layer, for depositing on a surface of a building roof (20) to the anchor plate (2) and/or a base element (4), in particular to a conical outer surface (5) of the base element (4), wherein the base element (4) extends around a connecting element (3) which is connected or connectable substantially orthogonally to the anchor plate (2), in particular is welded to the anchor plate (2), and the base element (4) is connected or connectable to the connecting element (3) and/or the anchor plate (2), preferably is welded to the connecting element (3) and/or the anchor plate (2), further preferably is formed in one piece with the connecting element (3) and/or the anchor plate (2),
connecting, in particular releasably connecting, of a locking element (6) to the connecting element (3), the locking element (6) having a first region (7) which substantially corresponds to a contour of the base element (4), in particular having a conical inner surface (5), so that the first region (7) of the locking element (6) can be brought into contact with the first layer (19) and/or the base element (4) in order to create a connection, in particular a watertight connection.

16. Method according to claim 15,
wherein a distance between the locking element (6) and the base element (4) and/or the anchor plate (2) can be adjusted by rotating the locking element (6).
